# EUROPEAN PATENT APPLICATION

(11) **EP 1 975 419 A2**
(43) Date of publication of application: **01.10.2008**
(21) Application number: 08251184.1
(22) Date of filing: 28.03.2008
(51) Int. Cl.: F16B 1/00

(54) **Connector apparatus and method**

(30) Priority: 30.03.2007 GB 0706292
(71) Applicant: Bluesky Telemetry Limited, Aberfeldy PH15 2YG (GB)
(72) Inventor: Hulbert, Ian, Aberfeldy PH15 2YG (GB); Yeudall, David, Irvine, Ayrshire KA11 4JT (GB); Leese, Mark, Glasgow G20 6EZ (GB)
(74) Representative: Peter, Kenneth William

(57) **Abstract**

The present disclosure relates to a connector apparatus (10). The connector apparatus comprises a first connector member (20), a second connector member (22) and a fastener (52) attaching the first and second connector members to each other when the fastener is in a first condition. The fastener is operative to allow for detachment of the first and second connector members from each other when the fastener is in a second condition. The fastener is operative to change from the first condition to the second condition in dependence upon an electrical signal. The connector apparatus also comprises a biasing device (50) configured to apply a bias between the first and second connector members, the bias being insufficient to overcome the attachment of the first and second connector members to each other when the fastener is in the first condition, and the bias being sufficient to overcome any residual attachment of the first and second connector members to each other when the fastener is in the second condition.

## Description

The present invention relates to a connector apparatus and method.

Telemetry apparatus that is configured to be releasably attached to wild animals is known. Such telemetry apparatus typically comprises a harness to which a telemetry device is attached. The telemetry apparatus is brought into use by securing the harness to an animal to be monitored.

Animal monitoring often involves tracking the location of an animal over a significant period of time, of perhaps some weeks or even months, as the animal moves in its natural habitat. In such applications the telemetry device may comprise a Global Positioning System (GPS) receiver that provides location information for the telemetry device and hence for the animal to which the telemetry device is attached. The telemetry apparatus typically also comprises data storage for storing location data, with stored location data being periodically transmitted by means of a radio frequency transmitter on the telemetry apparatus to a central location where the received location data can be analysed.

At the end of the monitoring period the telemetry apparatus normally needs to be recovered. Known approaches to recovery of the telemetry apparatus involve releasing the harness of the telemetry apparatus from the animal to thereby allow the telemetry apparatus to fall to the ground for subsequent recovery. Release of the harness is normally by means of a remotely actuated detonation of an explosive device or actuation of the explosive device after a predetermined time has elapsed. In some arrangements, the harness is held in place on the animal by a bolt, which either splits or moves upon detonation of the explosive device to thereby release the harness. In other arrangements, the harness is held in place by a Nylon^{RTM} pin, which melts upon the application of heat to thereby release the harness.

The present inventors have appreciated that the above described means of releasing telemetry apparatus from animals have disadvantages.

It is therefore an aim of the present invention to provide releasable connector apparatus.

In the light of the above mentioned appreciation of the disadvantages of the prior art the inventors have devised the present invention. According to a first aspect of the present invention there is provided a connector apparatus comprising:
a first connector member and a second connector member;
a fastener attaching the first and second connector members to each other when the fastener is in a first condition, the fastener allowing for detachment of the first and second connector members from each other when the fastener is in a second condition, the fastener being operative to change from the first condition to the second condition in dependence upon an electrical signal; and
a biasing device configured to apply a bias between the first and second connector members, the bias being insufficient to overcome the attachment of the first and second connector members to each other when the fastener is in the first condition, and the bias being sufficient to overcome any residual attachment of the first and second connector members to each other when the fastener is in the second condition.

In use, the first and second connector members are released from each other by applying an electrical signal to the fastener. The biasing device then overcomes any residual attachment between the first and second connector members. Thus, release of the first and second connector members involves no use of explosive material. This can provide for ease of international carriage because international carriage of explosives is normally subject to controls and restrictions. Furthermore, the use of explosive material in connector apparatus normally has to be considered with care from a safety perspective. However, avoidance of the use of explosive material in connector apparatus may not provide for as an effective release of the first and second connector members from each other. Thus, the biasing device overcomes whatever residual attachment there may be between the first and second connector members when the fastener has been actuated by application of the electrical signal. The residual attachment may, for example, be caused by a vacuum between the first and second connector members or by some residual effect of the fastener.

More specifically, the biasing device may be configured to move the first and second connector members apart from each other when the fastener is in the second condition.

Alternatively or in addition, the fastener may comprise an adhesive disposed between the first and second connector members.

More specifically, the adhesive may be operative in the first condition to bond to each of the first and second connector members.

More specifically, the adhesive may be operative in the second condition to break its bond to at least one of the first and second connector members. In use, the adhesive may be a material that has some stickiness that provides a residual attachment, which hinders the first and second connector members separating from each other. The biasing device may overcome the effect of such residual stickiness. Also, the biasing device may overcome a vacuum of about 1 bar that holds the first and second connector members together.

Alternatively or in addition, a first force may be needed to separate the first and second connecting members from each other when the fastener is in the first condition and a second force may be needed to separate the first and second connecting members from each other when the fastener is in the second condition, the connector apparatus being configured such that the second force is less than about 50% of the first force.

More specifically, the second force may be less than about 25% of the first force. More specifically, the fastener may comprise a mass of adhesive, the mass of adhesive presenting a surface area to at least one of the first and second connector members of about 2.5 cm².

Alternatively or in addition, the first force may be about 2 kg.

Alternatively or in addition, the second force may be about 0.5 kg.

Alternatively or in addition, the second force may comprise a force applied substantially in a direction parallel to a plane defining a boundary at which the first and second connector members are attached.

Alternatively or in addition, the fastener may be operative to change from the first condition to the second condition upon application of a predetermined electrical potential across the fastener.

More specifically, the predetermined electrical potential may be at least about 5V. Applying a voltage of about 5V may provide for a change from the first condition to the second condition in about 30 minutes.

More specifically, the predetermined electrical potential may be about at least 10v. Increasing the predetermined electrical potential may decrease a time taken to change from the first condition to the second condition.

Alternatively or in addition, the predetermined electrical potential may be about 30V. Thus, a time taken to change from the first condition to the second condition may be between about 30 seconds and about 2 minutes.

Alternatively or in addition, the predetermined electrical potential may be about 50V. Thus, a time taken to change from the first condition to the second condition may be about 5 seconds.

Alternatively or in addition, the adhesive may comprise a curable epoxy resin.

More specifically, the adhesive may comprise an aliphatic amine cured epoxy resin.

Alternatively or in addition, the epoxy resin may be cured when in the first condition.

Alternatively or in addition, the epoxy resin may have an ionic conductivity, e.g. of less than 1 mA per square centimetre of epoxy resin, when in the first condition.

Alternatively or in addition, the biasing device may comprise a resilient member.

More specifically, when the fastener is in the first condition the resilient member may be compressed, e.g. by pressing the first and second connector members together, whereby the resilient member exerts a bias between the first and second connector members.

Alternatively or in addition, the resilient member may comprise an 0-ring disposed between the first and second connector members.

Alternatively or in addition, the biasing device may comprise a spring member.

Alternatively or in addition, the connector apparatus may comprise a seal arrangement and the fastener may be disposed in relation to the seal arrangement, such that the seal arrangement presents a barrier to ingress of water to the fastener when the fastener is in the first condition. Thus, where operation of the fastener is liable to be jeopardised by water, moisture or the like, the seal arrangement may prevent ingress of such matter.

More specifically, the seal arrangement may be disposed between the first and second connector members and may be further disposed around the fastener. Thus, when the fastener is in the first condition, the fastener may be enclosed by the first and second connector members and the seal arrangement.

Alternatively or in addition, the seal arrangement may comprise an O-ring. More specifically, the O-ring may comprise a resilient material. More specifically, the O-ring may be compressed between the first and second connector members such that the O-ring exerts a bias between the first and second connector members when the fastener is in the first condition. Thus, the O-ring may function as a biasing device.

Alternatively or in addition, the seal arrangement may be configured to exert a bias between the first and second connector members when the fastener is in the first condition.

Alternatively or in addition, the seal arrangement may, when the fastener is in the first condition, keep the first and second connector members spaced apart from each other.

Alternatively or in addition, the first connector member may comprise an electrically conductive component which is electrically coupled to the fastener when the fastener is in the first condition.

More specifically, the electrically conductive component may comprise a layer of electrically conductive material disposed on the first connector member.

Alternatively or in addition, the electrically conductive component may be formed at least in part of aluminium. Where the fastener comprises an adhesive the adhesive may form a strong bond, when the fastener is in the first condition, with aluminium compared with other metals, such as copper.

Alternatively or in addition, the electrically conductive component may be in contact with the fastener when the fastener is in the first condition.

Alternatively or in addition, the second connector member may comprise an electrically conductive component which is electrically coupled to the fastener when the fastener is in the first condition.

More specifically, the electrically conductive components of the first and second connector members may be electrically coupled to the fastener at spaced apart locations on the fastener.

More specifically, the electrically conductive components of the first and second connector members may be electrically coupled to the fastener at opposing sides of the fastener.

Alternatively or in addition, the connector apparatus may comprise a releasable electrical connector and the connector apparatus may be configured such that the releasable electrical connector provides an electrical connection between the first and second connector members when the fastener is in the first condition.

More specifically, the connector apparatus may be configured such that the releasable electrical connector is attached to no more than one of the first and second connector members upon separation of the first and second connector members when the fastener is in the second condition.

More specifically, the releasable electrical connector may be attached to one of: neither of the first and second connector members; and one of the first and second connector members. Thus, the connector apparatus may be configured such that the releasable electrical connector provides the electrical connection by being in contact with but not attached to at least one of the first and second connector members. Therefore, when the electrical signal is applied to the fastener the first and second connector members can detach and separate without an electrical connection, such as an electrical wire, preventing separation of the first and second connector members.

Alternatively or in addition, the releasable electrical connector may be mounted on one of the first and second connector members.

Alternatively or in addition, a length of the releasable electrical connector may be changeable to accommodate a change in an extent to which the first and second connector members are spaced apart from each other. Thus, a change in a length of the releasable electrical connector may provide for maintenance of the electrical connection between the first and second connector members when their relative positions change.

Alternatively or in addition, the releasable electrical connector may comprise a rigid elongate member which, in use, extends between the first and second connector members.

More specifically, the rigid elongate member may be movable in relation to the first and second connector members to change a length of the releasable electrical connector. The rigid elongate member may be movable by no more than about a centimetre to accommodate comparatively small changes in separation of the first and second connector members.

More specifically, the releasable electrical connector may comprise a biasing component to, in use, bias the rigid elongate member towards a connector member.

Alternatively or in addition, the connector apparatus may comprise a sealing arrangement.

More specifically, the sealing arrangement may comprise an O-ring. The O-ring may be disposed between the first and second connector members to provide a seal when the fastener is in the first condition.

Alternatively or in addition, the first connector member may comprise a first conductive surface and the second connector may comprise a second conductive surface and, when the fastener is in the first condition, the first and second conductive surfaces may oppose each other and may be spaced apart from each other.

More specifically, the fastener may be disposed between the first and second conductive surfaces and the connector apparatus may be configured such that the fastener is electrically coupled to the first and second conductive surfaces.

Alternatively or in addition, the connector apparatus may comprise a sealing arrangement and may be configured such that when the fastener is in the first condition the fastener and the first and second conductive surfaces are sealed by the sealing arrangement against water ingress.

More specifically, the connector apparatus may be configured such that there are no two conductive portions, which are each electrically coupled to a respective one of the first and second conductive surfaces, spaced apart and opposing each other and outside the seal provided for the fastener and the first and second conductive surfaces.

Alternatively or in addition, the first and second connector members and the sealing arrangement may define an enclosed space and may present a barrier to ingress of water to the enclosed space.

More specifically, the fastener and the first and second conductive surfaces may be contained within the enclosed space.

Alternatively or in addition, the connector apparatus may be configured such that there are no two conductive portions, which are each electrically coupled to a respective one of the first and second conductive surfaces, spaced apart and opposing each other and outside the enclosed spaced.

In a form of the invention the connector apparatus may further comprise a third connector member and a second fastener, the second fastener attaching the first and third connector members to each other. In use, the third connector may be used to attach another harness or part of a harness to the first connector member.

More specifically, the third connector member may be attached to the first connector member at a location spaced apart from the second connector member.

Further embodiments of this form of the invention may comprise one or more features of the second connector member and its fastener.

Alternatively or in addition, at least one of the first and second connector members may comprise a printed circuit board (PCB). Thus, the fastener may be disposed between the PCBs of the first and second connector members.

Alternatively or in addition, the connector apparatus may comprise electrical apparatus operative to provide the electrical signal to the fastener.

More specifically, the electrical apparatus may be operative to provide the electrical signal in dependence upon a wireless signal. Thus, the connector apparatus may be operable remotely by means of the wireless signal.

More specifically, the electrical apparatus may comprise an antenna, e.g. for a VHF receiver, operative to receive the wireless signal.

Alternatively or in addition, the electrical apparatus may comprise a timer and the electrical signal may be provided in dependence upon an output from the timer.

More specifically, the timer may comprise a real time and/or date clock. Thus, the electrical signal may be provided at a predetermined real time and/or date, which is stored in the electrical apparatus.

Alternatively or in addition, the timer may comprise a time counter. Thus, the electrical signal may be provided upon the timer counter reaching a predetermined count value.

Alternatively or in addition, the electrical apparatus may comprise a user discernible indicator, such as an LED.

More specifically, the indicator may be operative in dependence upon the electrical signal being provided to the fastener.

More specifically, the indicator may be operative on a periodic basis, e.g. the indicator may provide a pulsed signal that is discernible by the user.

Alternatively or in addition, the electrical apparatus may comprise a battery. The battery may be operable to provide electrical power for the electrical apparatus.

Alternatively or in addition, the electrical apparatus may comprise a communications connector. More specifically, the communications connector may be operable to provide for electrical connection with computer apparatus, such as a Personal Computer (PC), and for communication between the electrical apparatus and the computer apparatus. Thus, the communications connector can provide a facility to program the electrical apparatus.

More specifically, the communications connector may be sealed during use of the connector apparatus. Thus, access may be gained to the communications connector when desired and at other times the seal to the communications connector may prevent ingress of matter, such as water, which is liable to jeopardise proper operation of the electrical apparatus.

Alternatively or in addition, the electrical apparatus may be contained in an electronics housing separate to a connector housing containing the connector apparatus.

Alternatively or in addition, the connector apparatus may be contained in a connector housing and the electrical apparatus may also be contained in the connector housing.

Alternatively or in addition, the connector apparatus may be sealed against ingress of matter, such as water, which is liable to jeopardise operation of the connector apparatus.

Alternatively or in addition, the connector apparatus may be configured for attachment to a harness configured to be fitted to a beast.

More specifically, the connector apparatus may be contained within a container which provides a seal against ingress of matter.

According to a second aspect of the present invention there is provided a harness configured to be fitted to a beast, the harness comprising a connector apparatus according to the first aspect of the present invention.

More specifically, the harness may be configured for releasable attachment of the harness to the beast by means of the connector apparatus.

Alternatively or in addition, the harness may comprise an elongate pliable harness member configured to fit around a part (e.g. a neck) of the beast.

More specifically, a first part of the elongate pliable harness member may be configured to be attached to a second part of the elongate pliable harness member by means of the connector apparatus.

More specifically, the first connector member may be attached to the first part of the elongate pliable harness member and the second connector member may be attached to the second part of the elongate pliable harness member.

Alternatively or in addition, the elongate pliable harness member may have a width of between about 80 mm and about 100 mm.

More specifically, the elongate pliable harness member may have a width of about 85 mm.

Further embodiments of the second aspect of the present invention may comprise one or more features of the first aspect of the present invention.

According to a third aspect of the present invention there is provided telemetry apparatus comprising connector apparatus according to the first aspect of the present invention.

More specifically, the telemetry apparatus may comprise electrical apparatus comprising at least one of: location determining apparatus, such as a GPS receiver; a Doppler shift based position location device; Global System for Mobile (GSM) communications apparatus; an Inertial Navigation System (INS); a UHF transceiver; and a VHF transceiver.

Alternatively or in addition, the telemetry apparatus may comprise data storage memory. The data storage memory may be operable to store data, such as location data acquired by a GPS receiver.

Alternatively or in addition, at least one of the electrical apparatus and the data storage memory may be contained in an electronics housing separate to a connector housing containing the connector apparatus. Thus, for example, the connector apparatus may be used to attach opposing end of a harness to each other and the electronics housing may be attached to or perhaps even suspended from the harness.

More specifically, the telemetry apparatus may comprise an electrical connection between the electronics housing and the connector housing. For example, the electrical connection may comprise a pair of electrical wires for conveying electrical power from a battery and associated control circuitry in the electrical housing to the fastener of the connector apparatus contained in the connector housing.

Alternatively or in addition, the connector apparatus may be contained in a connector housing and at least one of the electrical apparatus and the data storage memory may also be contained in the connector housing.

Further embodiments of the third aspect of the present invention may comprise one or more features of the first or second aspect of the invention.

According to a fourth aspect of the present invention, there is provided a method of attaching first and second connector members of a connector apparatus to each other, the method comprising: attaching the first and second connector members to each other with a fastener, the first and second connector members being kept attached to each other when the fastener is in a first condition; providing an electrical signal to the fastener to change the fastener from the first condition to a second condition in which the first and second connector members can be detached from each other; and applying a bias between the first and second connector members by means of a biasing device, the bias being insufficient to overcome the attachment of the first and second connector members to each other when the fastener is in the first condition and the bias being sufficient to overcome any residual attachment of the first and second connector members to each other when the fastener is in the second condition.

Embodiments of the fourth aspect of the present invention may comprise one or more features of any of the first to third aspects of the present invention.

The present inventors have realised that the seal arrangement is of wider application than has been hitherto described. Thus, according to a fifth aspect of the present invention there is provided connector apparatus comprising:
a first connector member and a second connector member;
a fastener attaching the first and second connector members to each other when the fastener is in a first condition, the fastener allowing for detachment of the first and second connector members from each other when the fastener is in a second condition, the fastener being operative to change from the first condition to the second condition in dependence upon an electrical signal; and
a seal arrangement, the connector apparatus being configured such that the seal arrangement presents a barrier to ingress of water, when the fastener is in the first condition, to at least one of: the fastener; and components conveying electricity to the fastener.

More specifically, the fastener may be disposed in relation to the seal arrangement such that the seal arrangement presents a barrier to ingress of water to the fastener when the fastener is in the first condition. Thus, in use and where operation of the fastener is liable to be jeopardised by matter such as water, moisture or the like, for example as is often the case in outdoor telemetry applications, the seal arrangement may prevent ingress of such matter.

More specifically, the connector apparatus may comprise a biasing device configured to apply a bias between the first and second connector members, the bias being insufficient to overcome the attachment of the first and second connector members to each other when the fastener is in the first condition, and the bias being sufficient to overcome any residual attachment of the first and second connector members to each other when the fastener is in the second condition.

Alternatively or in addition, the seal arrangement may be disposed between the first and second connector members and may be further disposed around the fastener. Thus, when the fastener is in the first condition, the fastener may be enclosed by the first and second connector members and the seal arrangement.

Alternatively or in addition, the first and second connector members and the seal arrangement may define an enclosed space containing the fastener.

Alternatively or in addition, the seal arrangement may comprise an O-ring. More specifically, the O-ring may comprise a resilient material. More specifically, the O-ring may be compressed between the first and second connector members such that the O-ring exerts a bias between the first and second connector members when the fastener is in the first condition. Thus, the O-ring may function as a biasing device.

Alternatively or in addition, the seal arrangement may be configured to exert a bias between the first and second connector members when the fastener is in the first condition.

Alternatively or in addition, the seal arrangement may, when the fastener is in the first condition, keep the first and second connector members spaced apart from each other.

Alternatively or in addition, the first connector member may comprise a first conductive surface and the second connector member may comprise a second conductive surface, the first and second conductive surfaces being, in use, at different electrical potentials, and being spaced apart from and yet proximate each other when the fastener is in the first condition. Thus, the seal arrangement may present a barrier to ingress of water to the first and second conductive surfaces when the fastener is in the first condition. This is advantageous when the connector apparatus is used out of doors and there is a risk of water or moisture causing an electrical short between the conductive surfaces.

More specifically, the first and second conductive surfaces may oppose each other.

Alternatively or in addition, the fastener may be disposed between the first and second conductive surfaces and the connector apparatus may be configured such that the fastener is electrically coupled to the first and second conductive surfaces.

More specifically, the connector apparatus may be configured such that there are no two conductive portions, which are each electrically coupled to a respective one of the first and second conductive surfaces, spaced apart from and proximate each other and outside the seal provided for the fastener and the first and second conductive surfaces.

Alternatively or in addition, the first and second connector members and the sealing arrangement may define an enclosed space and may present a barrier to ingress of water to the enclosed space.

More specifically, the fastener and the first and second conductive surfaces may be contained within the enclosed space.

Alternatively or in addition, the connector apparatus may be configured such that there are no two conductive portions, which are each electrically coupled to a respective one of the first and second conductive surfaces, spaced apart from and proximate each other and outside the enclosed spaced.

Further embodiments of the fifth aspect of the present invention may comprise one or more features of the first to fourth aspects of the present invention.

According to a sixth aspect of the present invention there is provided a method of attaching first and second connector members of a connector apparatus to each other, the method comprising: attaching the first and second connector members to each other with a fastener, the first and second connector members being kept attached to each other when the fastener is in a first condition; providing an electrical signal to the fastener to change the fastener from the first condition to a second condition in which the first and second connector members can be detached from each other; and disposing a seal arrangement in relation to the fastener such that the seal arrangement presents a barrier to ingress of water to the fastener when the fastener is in the first condition.

Embodiments of the sixth aspect of the present invention may comprise one or more features of any of the first to fifth aspects of the present invention.

The present inventors have realised that the feature of the releasable electrical connector has wider application than has hitherto been described. Thus, according to a seventh aspect of the present invention there is provided a connector apparatus comprising:
a first connector member and a second connector member;
a fastener attaching the first and second connector members to each other when the fastener is in a first condition, the fastener allowing for detachment of the first and second connector members from each other when the fastener is in a second condition, the fastener being operative to change from the first condition to the second condition in dependence upon an electrical signal; and
a releasable electrical connector, the connector apparatus being configured such that: the releasable electrical connector provides an electrical connection between the first and second connector members when the fastener is in the first condition; and the releasable electrical connector is attached to no more than one of the first and second connector members upon separation of the first and second connector members when the fastener is in the second condition.

In use, the releasable electrical connection provides for conduction of electricity between the first and second connector members when the fastener is in the first condition. This may, for example, provide for conduction of electricity to both the first and second connector members where this is required to change the fastener from the first condition to the second condition upon provision of the electrical signal.

More specifically, the connector apparatus may comprise a biasing device configured to apply a bias between the first and second connector members, the bias being insufficient to overcome the attachment of the first and second connector members to each other when the fastener is in the first condition, and the bias being sufficient to overcome any residual attachment of the first and second connector members to each other when the fastener is in the second condition.

Alternatively or in addition, the releasable electrical connector may be attached to one of: neither of the first and second connector members; and one of the first and second connector members.

Alternatively or in addition, the releasable electrical connector may be mounted on one of the first and second connector members.

Alternatively or in addition, a length of the releasable electrical connector may be changeable to accommodate a change in a separation between the first and second connector members.

Alternatively or in addition, the releasable electrical connector may comprise a rigid elongate member which, in use, extends between the first and second connector members.

More specifically, the rigid elongate member may be movable in relation to the first and second connector members to change a length of the releasable electrical connector.

More specifically, the releasable electrical connector may comprise a biasing component to, in use, bias the rigid elongate member towards a connector member.

Further embodiments of the seventh aspect of the present invention may comprise one or more features of the first to sixth aspects of the present invention.

According to a further aspect of the present invention there is provided a connector apparatus comprising: a first connector member and a second connector member; and a fastener attaching the first and second connector members to each other when the fastener is in a first condition, the fastener allowing for detachment of the first and second connector members from each other when the fastener is in a second condition, the fastener being operative to change from the first condition to the second condition in dependence upon an electrical signal.

Embodiments of the further aspect of the present invention may comprise one or more features of any previous aspect of the present invention.

Further features and advantages of the present invention will become apparent from the following specific description, which is given by way of example only and with reference to the accompanying drawings, in which:
Figure 1 provides a perspective view of telemetry apparatus according to an embodiment of the present invention;
Figure 2 provides an end view of the telemetry apparatus shown in Figure 1;
Figure 3 provides a side view of the telemetry apparatus shown in Figure 1;
Figure 4 provides a perspective view of the telemetry apparatus shown in Figure 1 with the cover removed;
Figure 5 provides an exploded perspective view of the connector apparatus of the telemetry apparatus shown in Figure 1; and
Figures 6a and 6b provide plan views of parts of the connector apparatus according to a second embodiment of the present invention.

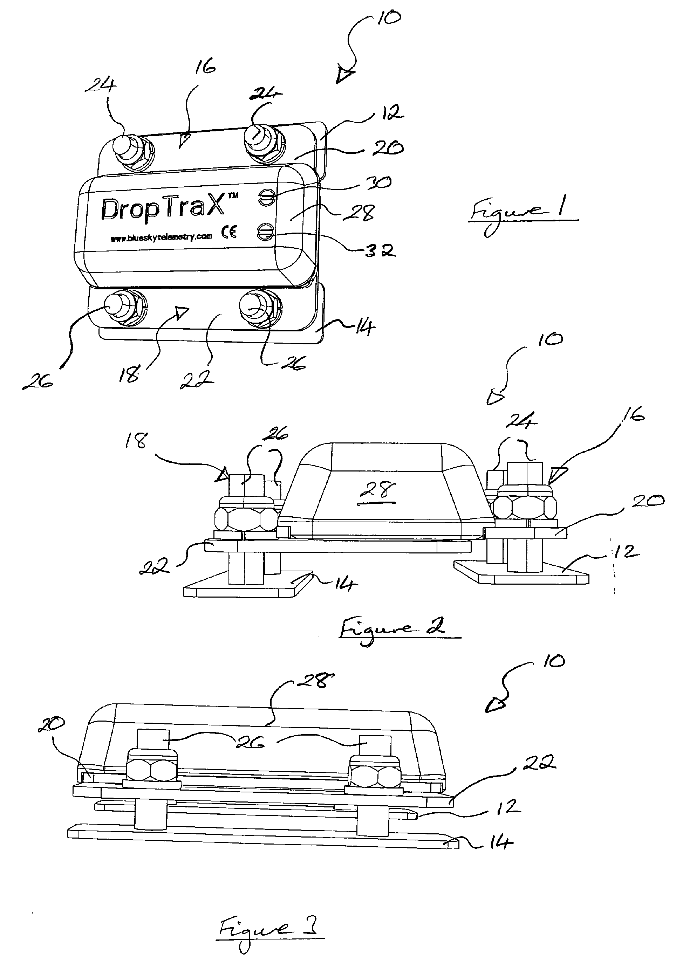

Figure 1 shows telemetry apparatus 10 in perspective view. The telemetry apparatus comprises first and second harness connector members 12, 14, which, in use of the telemetry apparatus, are connected to a harness (not shown). The harness may take one of many different known forms. In its simplest form, the harness consists of a pliable strap formed of plastics or leather that is of sufficient length to fit around the neck of a beast that is to be monitored by the telemetry apparatus. Each of the first and second harness connector members 12, 14 is fitted to respective opposing ends of the harness with the telemetry apparatus 10 providing the means to attach the opposing ends of the harness around the neck of the beast, as will become apparent from the following description.

Referring now to Figure 2, which provides an end view of the telemetry apparatus shown in Figure 1, the telemetry apparatus 10 can be seen to consist of a first telemetry apparatus part 16 and of a second telemetry apparatus part 18. Before the telemetry apparatus is fitted to a beast, a harness has the first and second telemetry apparatus parts 16, 18 attached to respective, opposing ends of the harness and before the first and second telemetry apparatus parts are attached to each other as shown in Figures 1 to 3. The harness is fitted around a beast, e.g. around its neck, such that the first and second telemetry apparatus parts 16, 18 are adjacent and in roughly the same disposition in relation to each other as shown in Figure 2. The first and second telemetry apparatus parts 16, 18 are attached to each other by means described below to secure the telemetry apparatus 10 to the beast. When the telemetry apparatus is to be detached from the beast the first and second telemetry apparatus parts separate from each other by means described below to allow the telemetry apparatus and harness to fall to the ground.

Referring to the different views of the telemetry apparatus shown in Figures 1 to 3, the telemetry apparatus 10 also comprises a first connector member 20 and a second connector member 22. The first connector member 20 is attached to the first harness connector member 12 by a pair of spaced apart bolts 24 and the second connector member 22 is attached to the second harness connector member 14 by a further pair of spaced apart bolts 26. Each of the first and second connector members comprises a printed circuit board (pcb) as its substrate. The first connector member 20 of a thickness of substantially 3 mm and the second connector member 22 is of a thickness of substantially 1.5 mm. In addition, the first telemetry apparatus part 16 comprises a cover 28, which encloses electrical apparatus of the telemetry apparatus 10 and provides a seal against ingress of water and moisture. The cover 28 is provided with two apertures through each of which light from a respective one of first and second LEDs 30, 32 is emitted.

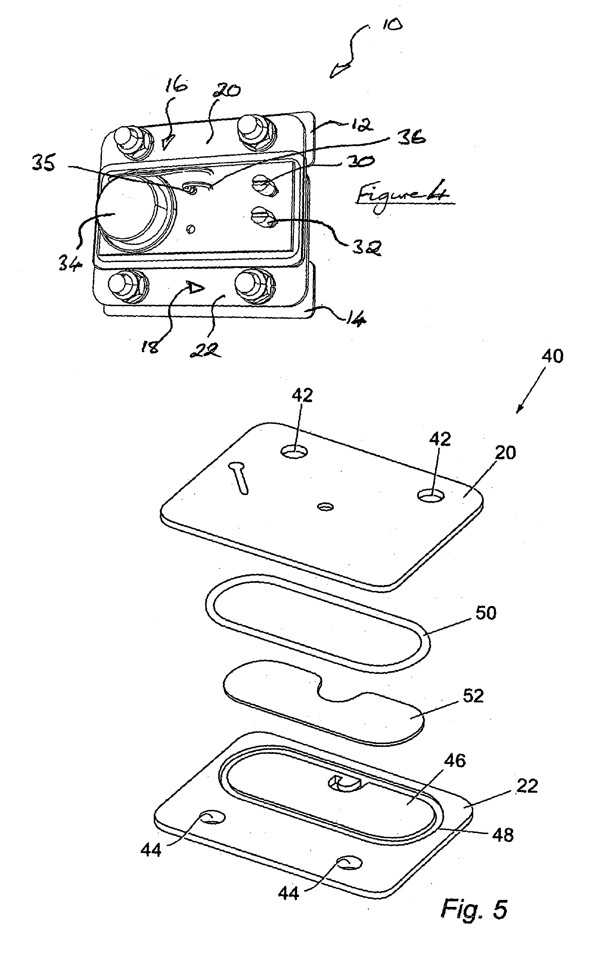

Turning now to Figure 4, a view of the telemetry apparatus 10 of Figures 1 to 3 can be seen in which the cover 28 is removed to reveal an upper side of the first connector member 20. A battery 34 and supporting electronic components (not shown) are mounted on the first connector member 20. In addition, whatever further electronic apparatus is required for a particular telemetry application is mounted on the first connector member 20. The further electronic apparatus (not shown) may include: location determining apparatus, such as a GPS receiver; Global System for Mobile (GSM) communications apparatus; an Inertial Navigation System (INS); a UHF transceiver; and a VHF transceiver. In addition, an electrical connector (not shown) is provided on the first connector member to provide for communication between the telemetry apparatus 10 and a Personal Computer (PC), e.g. to configure the telemetry apparatus for a particular application. The power supply, comprising the battery 34 and supporting electronic components, the further electronic apparatus and the electrical connector are provided in accordance with well known design practices. Also shown in Figure 4 is a sprung electrical connector 35, which is mounted on the first connector member 20. The sprung electrical connector 35 comprises a main body part, which is attached to the first connector member 20, and an elongate, rigid member mounted for movement in relation to the main body part whilst maintaining electrical conduction with the main body part. The sprung electrical connector 35 also comprises a spring to bias the elongate, rigid member away from the point of attachment of the main body part. Thus, the sprung electrical connector 35 is of a well known form and function. The sprung electrical connector 35 is disposed on the first connector member 20 such that the elongate, rigid member extends through an aperture formed in the first connector member and the main body is electrically coupled to electrical components on the first connector member 20. In use, the elongate, rigid member of the sprung electrical connector 35 is pressed against a conductive aluminium layer (see description below with reference to Figure 5) to provide a conductive path between the first and second connector members 20, 22. An electrical wire 36 provides an electrical connection between the electrical connector 35 and the circuitry applying the increase in electrical potential to the adhesive.

In an un-illustrated form of the invention, the telemetry apparatus 10 of Figures 1 to 4 lacks the electrical apparatus mentioned above, e.g. the battery and the communications and location determining apparatus. Thus, such electrical apparatus is enclosed in an electrical housing separate to the telemetry apparatus 10 of Figures 1 to 4. In use, the electrical housing is attached to the harness at a location spaced apart from the telemetry apparatus 10. Electrical power to the telemetry apparatus from the electrical housing is provided by means of a pair of wires; one of the wires 35 is connected to the sprung electrical connector 35 (as shown in Figure 4); and the other wire is connected to one of the aluminium layers described below with reference to Figure 5. Otherwise the form and function of this un-illustrated form the invention is as described with reference to Figure 5.

Figure 5 provides an exploded perspective view of certain components of the telemetry apparatus of Figures 1 to 4, which together constitute the connector apparatus 40. The connector apparatus comprises the first and second connector members 20, 22. As can be seen from Figure 5, the first connector member 20 has a pair of spaced apart apertures 42 through which the bolts 24 of Figures 1 to 3 are received. Also, the second connector member 22 has a pair of spaced apart apertures 44 through which the bolts 26 of Figures 1 to 3 are received. A layer of nickel alloy 46 is provided over part of one face of the second connector member 22. The nickel alloy consists of: between substantially 90% and substantially 93% nickel; and between substantially 7% and substantially 10% phosphorous. The nickel alloy is deposited by means of a catalytic reaction. A channel 48 is formed in the PCB of the second connector member 22 such that the channel extends around the layer of nickel alloy 46. The channel 48 is of a depth so as to partly receive an O-ring 50. The O-ring 50 is formed of a resilient material, such as an appropriate plastics material or rubber. The first connector member 20 has a layer of aluminium (not shown) formed on one side. The layer of aluminium on the first connector member 20 is of generally the same dimensions as the nickel alloy layer 46 on the second connector member. Thus, when the first and second connector members 20, 22 are brought together such that their aluminium layers are facing and such that they are in registration with each other as regards their aluminium layers, the O-ring 50 keeps the two aluminium layers spaced apart from each other to a predetermined extent. The predetermined extent is determined by the thickness of the O-ring 50 and the depth of the channel 48 formed in the second connector member 22. The first and second connector members 20, 22 and the O-ring 50 together form a space enclosing the two aluminium layers on the first and second connector members 20, 22.

A mass of adhesive 52 is provided in the space formed by the first and second connector members 20, 22 and the O-ring 50 and such that the adhesive 52 is in contact with each of the aluminium layers formed on the first and second connector members 20, 22. The adhesive is ElectRelease^{™} E3 provided by EIC Laboratories of Norwood, MA, USA. More specifically, the adhesive is an aliphatic amine cured epoxy resin. The adhesive 52 is brought into use when the harness of the telemetry apparatus 10 is to be fitted to a beast by depositing a mass of uncured adhesive on one of the aluminium layers of the connector members and inside the O-ring 50 and then bringing the two connector members together 20, 22 so that the adhesive makes contact with both aluminium layers. The two connector members 20, 22 are pressed together to compress the resilient O-ring 50 and the two connector members are held thus until the adhesive has cured, thereby bonding the two connector members together. This constitutes a first condition of the adhesive. The compression of the O-ring 50 causes the O-ring to impart a spring bias between the two connector members. The spring bias is insufficient to force the thus bonded connector members apart.

The adhesive as provided by EIC Laboratories is of a kind that looses its adhesion upon the application of an electrical potential across the adhesive. This constitutes a second condition of the adhesive. Thus, when it is desired to release the harness from the beast, an electrical potential is applied across the adhesive 52 by way of the aluminium layers provided on each of the first and second connector members 20, 22. The sprung electrical connector 36 provides for a conductive path between the two connector members and hence the two aluminium layers for maintenance of the electrical potential across the adhesive. The electrical potential applied is between about 5 V and 50 V and is selected in accordance with: the time required for the adhesive to loose adhesion; and the surface area of adhesive in contact with the aluminium layers. The electrical potential is applied by means of electrical circuitry provided on the first connector member. The design of such electrical circuitry is readily accomplished by the skilled person when relying on no more than common general knowledge.

The configuration of the telemetry apparatus such that the aluminium layers and adhesive are enclosed by the first and second connector members and the O-ring presents a barrier to the ingress of water and moisture, thereby reducing the likelihood of electrical shorts during use of the telemetry apparatus, in particular out of doors.

As mentioned above the telemetry apparatus may comprise a wireless transceiver. Thus the telemetry apparatus is capable of receiving a wireless signal to initiate release of the harness from the beast. Alternatively or in addition, the release of the harness is under the control of an electronic timer or real time clock in the telemetry apparatus. Prior to fitting the telemetry apparatus to a beast, the telemetry apparatus is programmed, e.g. by means of a PC as described above, to release the harness at a predetermined date and time.

When the adhesive has lost its adhesion, the bias imparted by the compressed O-ring overcomes any residual adhesion between the two connector members as might be caused by stickiness of the adhesive. In addition, as the sprung electrical connector 36 is only pressed against the aluminium layer of the first connector member 20, the sprung electrical connector 36 presents no impediment to the complete separation of the two connector members, thereby allowing the harness to fall from the beast to the ground.

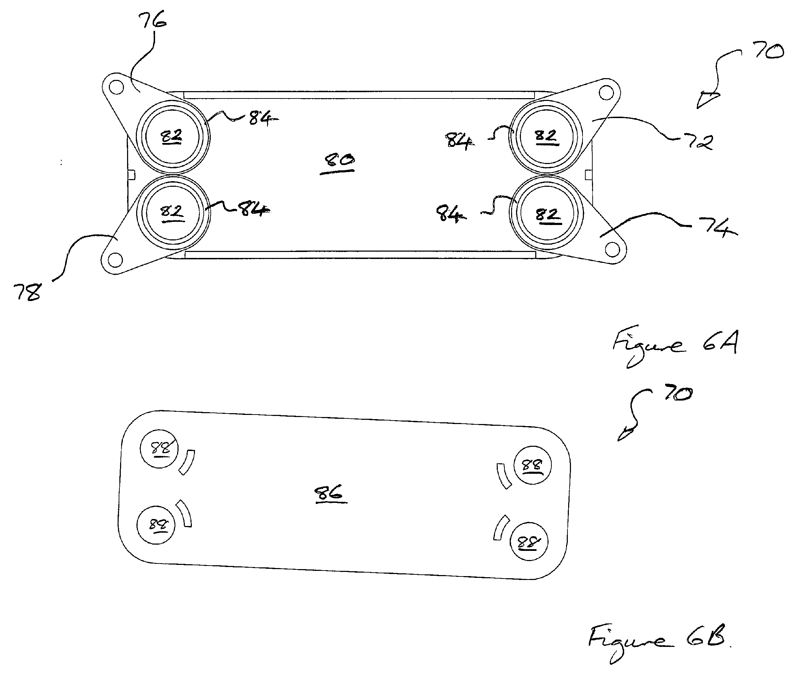

Figure 6a and 6b provide plan views of parts of connector apparatus 70 according to a second embodiment of the present invention. The second embodiment is suitable for use with birds and comprises a harness (not shown), which is used to attach telemetry apparatus to a bird. Such avian telemetry apparatus normally comprises location determining apparatus (such as a GPS device or a Doppler shift based device), a real time clock and an RF communications module. All component parts of the avian telemetry apparatus are contained in one housing as per the first form of the first embodiment described above and shown in Figures 1 to 4. The harness comprises first and second spaced apart straps (not shown), each of which fits over a respective wing of the bird to which the telemetry apparatus is attached.

Referring now to Figure 6a, one end of the first strap of the avian harness is attached to a first strap member 72 and the other, opposing end of the first strap is attached to a second strap member 74. In addition, one end of the second strap of the avian harness is attached to a third strap member 76 and the other, opposing end of the second strap is attached to a fourth strap member 78. Each of the first to fourth strap members 72 to 78 is received in a respective one of four corners of a substrate member 80. The first to fourth strap members rest on but are not attached to the substrate member 80. As can be seen from Figure 6a, each strap member has an aluminium layer 82 provided on its upper surface (i.e. the surface facing away from the substrate) and a groove formed in the strap member surface around the aluminium layer. An O-ring 84 is partly received in each groove. Each O-ring 84 is formed of a resilient material, such as an appropriate plastics material or rubber. Each of the strap members constitutes a first connector member. The second connector member 86 is shown in Figure 6a and has four aluminium layers 88 provided towards a respective one of its four corners.

In use of the embodiment shown in Figures 6a and 6b, an adhesive (not shown) of the kind described above with reference to the first embodiment is deposited on one or other of the four aluminium layers provided on the strap members and the second connector member. Then the second connector member 86 is positioned over the substrate member 80 such that the aluminium layers on the strap members are in registration with the aluminium layers on the second connector member and held thus until the adhesive bonds to the aluminium layers on the strap members and the second connector member. Thus the adhesive attaches the strap members to the second connector member. Also, the second connector member 86 is attached, e.g. by adhesive, to the substrate member 80. It will be immediately apparent that the second embodiment is formed and functions in accordance with the principles described above with reference to Figures 1 to 5. When it is desired to release the harness straps a potential is applied across each mass of adhesive bonding the strap members 72 to 78 to the second connector member 86. Although not shown in Figures 6a and 6b, electrical conduction is provided to the aluminium layer 82 on each strap member by means of a sprung electrical connector as described above. The applied potential causes the adhesive to loosen its bonds to the strap members and the second connector member thereby freeing the strap members from the second connector member. Then the strap members separate from the joined together substrate member 80 and second connector member 86 through an aperture formed in their profiles at each of the four corners.

## Claims

1. A connector apparatus (10) comprising:
a first connector member (22) and a second connector member (24);
a fastener (52) attaching the first and second connector members to each other when the fastener is in a first condition, the fastener being operative to allow for detachment of the first and second connector members from each other when the fastener is in a second condition, the fastener being operative to change from the first condition to the second condition in dependence upon an electrical signal; and
a biasing device (50) configured to apply a bias between the first and second connector members, the bias being insufficient to overcome the attachment of the first and second connector members to each other when the fastener is in the first condition, and the bias being sufficient to overcome any residual attachment of the first and second connector members to each other when the fastener is in the second condition.

2. The apparatus according to claim 1, in which the biasing device is configured to move the first and second connector members apart from each other when the fastener is in the second condition.

3. The apparatus according to claim 1 or 2, in which the fastener comprises an adhesive disposed between the first and second connector members, the adhesive being operative in the first condition to bond to each of the first and second connector members.

4. The apparatus according to claim 3, in which the adhesive is operative in the second condition to break its bond to at least one of the first and second connector members.

5. The apparatus according to any preceding claim, in which a first force is needed to separate the first and second connecting members from each other when the fastener is in the first condition and a second force is needed to separate the first and second connecting members from each other when the fastener is in the second condition, the connector apparatus being configured such that the second force is less than substantially 25% of the first force.

6. The apparatus according to claim 5, in which the first force is substantially 2 kg and the second force is substantially 0.5 kg.

7. The apparatus according to any preceding claim, in which the fastener is operative to change from the first condition to the second condition upon application of a predetermined electrical potential across the fastener.

8. The apparatus according to any preceding claim, in which the fastener comprises an adhesive and the adhesive comprises an aliphatic amine cured epoxy resin.

9. The apparatus according to any preceding claim, in which the biasing device comprises a resilient member.

10. The apparatus according to claim 9, in which, when the fastener is in the first condition, the resilient member is compressed, whereby the resilient member exerts a bias between the first and second connector members.

11. The apparatus according to claim 9 or 10, in which the resilient member comprises an 0-ring disposed between the first and second connector members.

12. The apparatus according to any preceding claim, in which the connector apparatus comprises a seal arrangement and the fastener is disposed in relation to the seal arrangement, such that the seal arrangement presents a barrier to ingress of water to the fastener when the fastener is in the first condition.

13. The apparatus according to claim 12, in which the seal arrangement is disposed between the first and second connector members and is disposed around the fastener.

14. The apparatus according to claim 13, in which the seal arrangement comprises an O-ring.

15. The apparatus according to any one of claims 12 to 14, in which the seal arrangement is configured to exert a bias between the first and second connector members when the fastener is in the first condition.

16. The apparatus according to any preceding claim, in which the first connector member comprises an electrically conductive component, which is in contact with the fastener when the fastener is in the first condition, and the second connector member comprises an electrically conductive component, which is in contact with the fastener when the fastener is in the first condition, the electrically conductive components of the first and second connector members being in contact with the fastener at spaced apart locations on the fastener.

17. The apparatus according to claim 16, in which the electrically conductive components of the first and second connector members are electrically coupled to the fastener at respective opposing sides of the fastener.

18. The apparatus according to any preceding claim, in which the connector apparatus comprises a releasable electrical connector and the connector apparatus is configured such that the releasable electrical connector provides an electrical connection between the first and second connector members when the fastener is in the first condition.

19. The apparatus according to claim 18, in which the connector apparatus is configured such that the releasable electrical connector is attached to no more than one of the first and second connector members upon separation of the first and second connector members when the fastener is in the second condition.

20. The apparatus according to claim 18 or 19, in which a length of the releasable electrical connector is changeable to accommodate a change in an extent to which the first and second connector members are spaced apart from each other when the fastener is in the first condition.

21. The apparatus according to claim 20, in which the releasable electrical connector comprises a biasing component to, in use, bias a rigid member of the electrical connector towards a connector member and thereby provide for maintenance of an electrical connection between the first and second connector members.

22. The apparatus according to any preceding claim, in which the first connector member comprises a first conductive surface and the second connector member comprises a second conductive surface and, when the fastener is in the first condition, the first and second conductive surfaces oppose and are spaced apart from each other, the fastener being disposed between and electrically coupled to the first and second conductive surfaces.

23. The apparatus according to claim 22, in which the connector apparatus comprises a sealing arrangement and is configured such that when the fastener is in the first condition the fastener and the first and second conductive surfaces are sealed by the sealing arrangement against water ingress to an enclosed space defined by the first and second connector members and the sealing arrangement, the enclosed space containing the fastener and the first and second conductive surfaces.

24. The apparatus according to claim 23, in which the connector apparatus is configured such that there are no two conductive portions, which are each electrically coupled to a respective one of the first and second conductive surfaces, spaced apart, opposing each other and outside the enclosed space.

25. The apparatus according to any preceding claim, in which the connector apparatus further comprises a third connector member and a second fastener, the second fastener attaching the first and third connector members to each other.

26. The apparatus according to any preceding claim, in which the connector apparatus comprises electrical apparatus operative to provide the electrical signal to the fastener, the electrical apparatus being operative to provide the electrical signal in dependence upon a wireless signal.

27. The apparatus according to any preceding claim, in which the electrical apparatus comprises a timer and the electrical signal is provided in dependence upon an output from the timer.

28. A harness configured to be fitted to a beast, the harness comprising a connector apparatus according to any one of the preceding claims.

29. A harness according to claim 28, in which the harness is configured for releasable attachment of the harness to a beast by means of the connector apparatus.

30. Telemetry apparatus comprising connector apparatus according to any one of claims 1 to 27.

31. A method of attaching first (20) and second connector members (22) of a connector apparatus 10 to each other, the method comprising:
attaching the first and second connector members to each other with a fastener (50), the first and second connector members being kept attached to each other when the fastener is in a first condition;
providing an electrical signal to the fastener to change the fastener from the first condition to a second condition in which the first and second connector members can be detached from each other; and
applying a bias between the first and second connector members by means of a biasing device (52), the bias being insufficient to overcome the attachment of the first and second connector members to each other when the fastener is in the first condition and the bias being sufficient to overcome any residual attachment of the first and second connector members to each other when the fastener is in the second condition.
